# EUROPÄISCHE PATENTSCHRIFT

(11) **EP 0 560 042 B1**
(45) Veröffentlichungstag und Bekanntmachung des Hinweises auf die Patenterteilung: **20.11.1996**
(21) Anmeldenummer: 93101568.9
(22) Anmeldetag: 02.02.1993
(51) Int. Cl.: B21D 43/28, B65G 47/26

(54) **Vorschubeinrichtung einer Rollenmesserwinkelschere**
Feeding device of an angle shears with rotary cutters
Dispositif d'avancement pour une cisaille à coupe angulaire à couteaux rotatifs circulaires

(30) Priorität: 08.02.1992 DE 4203683
(43) Veröffentlichungstag der Anmeldung: 15.09.1993
(73) Patentinhaber: Krupp Kunststofftechnik GmbH, 45143 Essen (DE)
(72) Erfinder: Lentz, Norbert, Dr.-Ing., W-4300 Essen 1 (DE); Schmidt, Harald, Dipl.-Ing., W-5163 Langerwehe (DE); Sommer, Walter, W-4300 Essen 1 (DE)

(56) Entgegenhaltungen:
- EP-A- 0 392 621
- DE-A- 2 345 658
- DE-A- 2 644 240
- DE-A- 2 727 638
- DE-C- 3 040 447
- US-A- 2 668 591
- US-A- 5 085 311

## Beschreibung

Die Erfindung betrifft eine Vorschubeinrichtung für Blechstreifen aus ferromagnetischem Material zu dem zweiten Messerwellenpaar einer Rollenmesserwinkelschere mit einer Ablage für die von dem ersten Messerwellenpaar geschnittenen Blechstreifen und mindestens einem umlaufenden Mitnehmerorgan.

Rollenmesserwinkelscheren weisen zwei Messerwellenpaare mit Rollenmessern auf. Die Achsen jedes Messerwellenpaares sind - in der Draufsicht gesehen - senkrecht zu den Achsen des anderen Messerwellenpaares angeordnet (vgl. z.B. EP 0 208 564 A1). Mit dem ersten Messerwellenpaar werden Blechtafeln, insbesondere aus Weißblech für Blechverpackungen, in Streifen geschnitten und auf einen, in Vorschubrichtung gesehen, hinter dem ersten Messerwellenpaar liegenden Ablage- und Transporttisch praktisch ohne Abstand zueinander abgelegt. Dort müssen die Streifen separiert und einzeln rechtwinklig zur Vorschubrichtung des ersten Messerwellenpaares dem zweiten Messerwellenpaar zugeführt werden. Für das Separieren der Streifen und ihr Zuführen zum zweiten Messerwellenpaar sind im wesentlichen zwei Lösungen bekannt.

Bei einer gattungsgemäßen Vorschubeinrichtung ist die Ablage für die Blechstreifen z.B. durch verschieden hohe Platten stufen- bzw. terrassenförmig zum zweiten Messerwellenpaar hin abnehmend ausgebildet, wobei jedem Streifen eine eigene Stufe zugeordnet ist. Das umlaufende Mitnehmerorgan besteht in der Regel aus zwei Ketten, deren Mitnehmerklinken - links und rechts gleich - den verschiedenen Ablagestufen entsprechend unterschiedlich hoch ausgebildet sind. Entlang dem Verlauf der Ketten ist der Abstand der Mitnehmerklinken größer als die Stufenlänge bzw. die Streifenbreite, so daß die Streifen nacheinander - voneinander separiert - zum zweiten Messerwellenpaar transportiert werden.

Nachteilig bei dieser Vorschubeinrichtung ist, daß die Mitnehmerklinken auf der Kette und die Stufenplatten bei einem Formatwechsel (andere Streifenbreite und ggf. Anzahl) verstellt bzw. sogar ausgewechselt werden müssen, was zu unerwünschten Stillstandszeiten der Winkelschere führt. Die Mitnehmerklinken treffen mit konstanter Geschwindigkeit auf die ruhenden Streifen. Es besteht somit die Gefahr einer Beschädigung der hinteren Kante der Streifen durch einen Einschlag. Im übrigen unterliegen die einzelnen, aus einer Tafel geschnittenen Streifen verschiedenen Fallbedingungen (unterschiedliche Fallhöhe und damit unterschiedliche Fallzeiten).

Bei einer anderen bekannten Vorschubeinrichtung befinden sich oberhalb der Transportebene für das zweite Messerwellenpaar drehbare Stangen, wobei jedem Streifen eine Stange zugeordnet ist. Die Streifen werden von dem ersten Messerwellenpaar auf die Stangen geschoben und die Stangen nacheinander gedreht, so daß die Streifen einzeln auf die Transportebene für das zweite Messerwellenpaar fallen. Umlaufende Ketten mit mechanischen, formschlüssigen Mitnehmerklinken schieben die derart separierten Streifen zum zweiten Messerwellenpaar vor.

Auch bei dieser Vorschubeinrichtung sind bei einem Formatwechsel der Streifen umfangreiche Umrüstungen notwendig. Außerdem ist die Transportebene zum zweiten Messerwellenpaar von oben verbaut. Dies ist hinderlich bei der Beseitigung von sog. Stoppern (Stillstände infolge unbeabsichtigter Ereignisse). Zum Steuern der Wendestangen ist eine aufwendige Getriebeanordnung notwendig, und es besteht ebenfalls die Gefahr von Einschlägen der Mitnehmerklinken in die hintere Kante der Blechstreifen. Bei einem Formatwechsel der Blechstreifen ist ein erheblicher Aufwand zum Umrichten notwendig.

Der Erfindung liegt die Aufgabe zugrunde, eine Vorschubeinrichtung der eingangs genannten Art mit einfachen Mitteln dahingehend zu verbessern, daß ein Formatwechsel der Streifen ohne großen Aufwand und schnell vollzogen werden kann.

Diese Aufgabe wird dadurch gelöst, daß die Ablage für die Blechstreifen aus ebenen Flächenelementen mit glatter Oberfläche besteht, die bzw. die jeweils durch einen in Vorschubrichtung verlaufenden, parallen Abstand voneinander getrennt sind, daß das umlaufende Mitnehmerorgan als Endlosband ausgebildet ist, dessen Obertrum zwischen den bzw. zwischen zwei Flächenelementen um einen Abstand von 0,1 bis 0,9 mm, vorzugsweise 0,2 bis 0,5 mm, unterhalb der durch die Flächenelemente gebildeten Ablage- und Transportebene angeordnet ist und daß unterhalb des Obertrum des Endlosbandes eine Vielzahl von hintereinander angeordneten, in der Höhe einzeln steuerbaren Magnetanordnungen vorhanden sind.

Die erfindungsgemäße Vorschubeinrichtung weist eine nach oben hin völlig offene und dadurch gut zugängliche Ablage- und Transportebene für die Blechstreifen auf. Sie besteht lediglich aus einfachen Teilen, deren Bewegung beim Betrieb keinerlei Gefahr nach sich zieht. Bei einem Formatwechsel werden keine mechanischen Teile ausgewechselt, und es werden lediglich mechanische Teile (Anschlagleiste und ggf. der Vorschubtisch) verstellt, was bei der guten Zugänglichkeit keinerlei Probleme bereitet, und es bedarf lediglich einer anderen Ansteuerung der Höhenveränderung der unter dem Obertrum befindlichen Magnetanordnungen. Die erfindungsgemäße Vorschubeinrichtung ist schließlich für hohe Leistung geeignet, da durch den Reibschluß zwischen dem umlaufenden Endlosband und dem Blechstreifen keine Beschädigung möglich ist.

Um die Magnetwirkung der Magnetanordnungen zu erhöhen, können diese aus mehreren Einzelmagneten aufgebaut sein, die - auch übereinander - in zwei Reihen angeordnet sind, die jeweils durch einen in Richtung des Endlosbandes verlaufenden Abstand voneinander getrennt sind.

Um einen betriebssicheren Lauf des Endlosbandes zu erreichen und eine eindeutige Höhenlage desselben vorgeben zu können, sind die einander zugewandten Kanten der bzw. zweier benachbarter Flächenelemente nach unten abgewinkelt und das Obertrum des Endlosbandes mit seinen Kanten auf den abgewinkelten Kanten angeordnet.

Die Höhenverstellung der Magnetanordnungen wird vorzugsweise durch pneumatische Hubzylinder bewerkstelligt.

Ausführungsbeispiele der Erfindung sind in der Zeichnung dargestellt und werden im folgenden näher erläutert. Es zeigen
- Fig. 1: eine Vorschubeinrichtung in einem Querschnitt,
- Fig. 2: die Vorschubeinrichtung in einem Längsschnitt längs der Linie II-II in Fig. 1,
- Fig. 3: die Vorschubeinrichtung in einem auszugsweisen Querschnitt längs der Linie III-III in Fig. 2,
- Fig. 4: die Vorschubeinrichtung in einem auszugsweisen Querschnitt längs der Linie IV-IV in Fig. 2,
- Fig. 5: die Vorschubeinrichtung in einem auszugsweisen schematisierten Längsschnitt während des Separierens des ersten Blechstreifens und
- Fig. 6: eine Vorschubeinrichtung mit zwei umlaufenden Endlosbändern im Querschnitt.

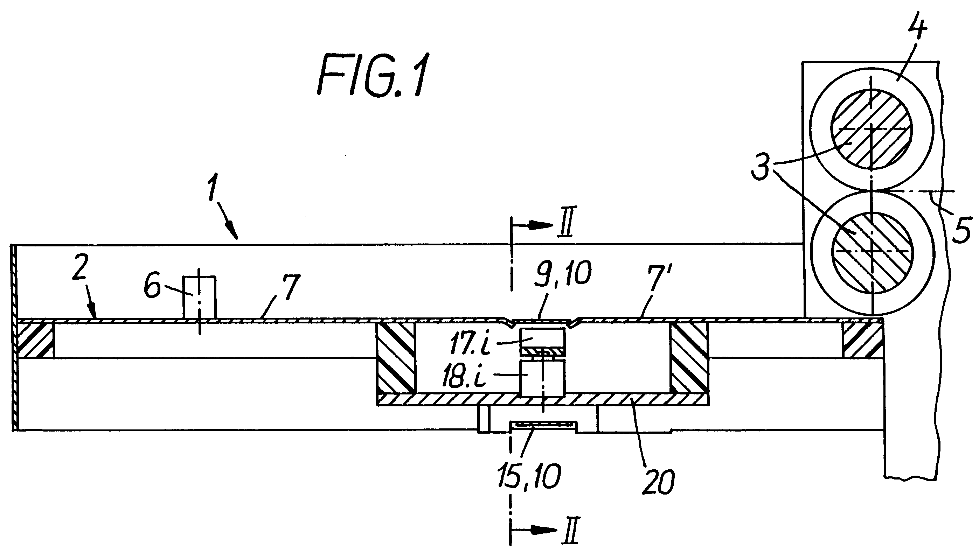

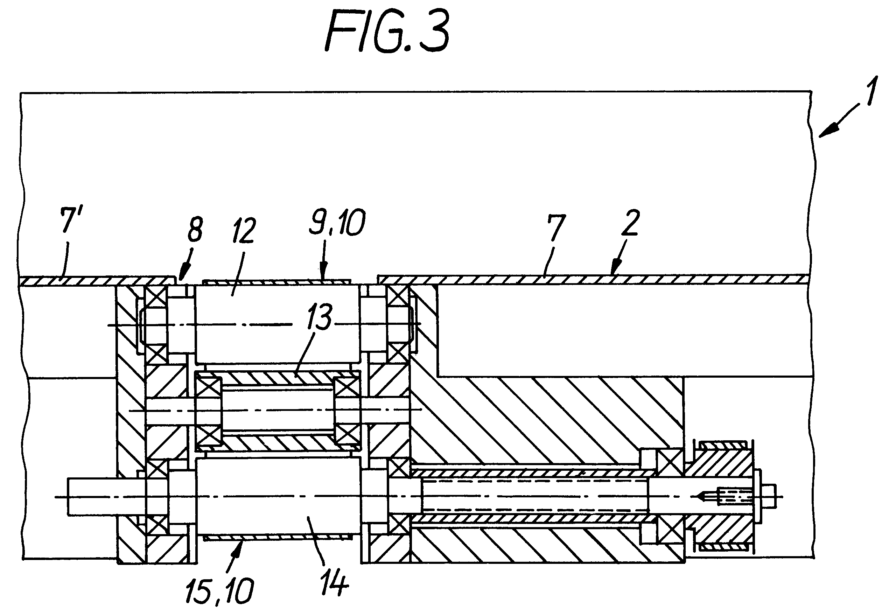

Die Vorschubeinrichtung gemäß den Fig. 1 bis 5 weist einen Vorschubtisch 1 mit einer Ablage- und Transportebene 2 für ferromagnetische Blechstreifen S.1 bis S.3 (allgemein S.1 bis S.n) auf. Der Vorschubtisch 1 ist unterhalb eines ersten Messerwellenpaares 3 mit Rollenmessern 4 angeordnet, durch die Blechtafeln in Höhe einer anderen Transportebene 5 (in Fig. 1 oben rechts) gelangen und zu Streifen geschnitten werden. Die Streifen verlassen das Messerwellenpaar 3 in Richtung des Vorschubtisches 1 und werden durch eine parallel zu dem Messerwellenpaar 3 verlaufende, verstellbare Anschlagleiste 6 in ihrer Ruhelage positioniert.

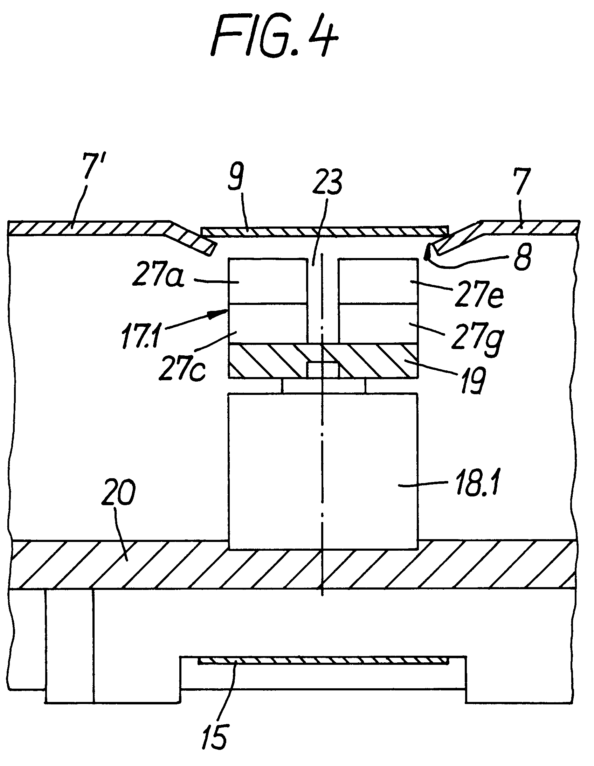

Die Ablage- bzw. Transportebene 2 wird durch zwei parallele zum Messerwellenpaar 3 verlaufende Bleche 7, 7' aus verschleißfestem, nichtrostendem Material mit glatter Oberfläche gebildet, zwischen denen ein paralleler Abstand oder Spalt 8 (vgl. Fig. 4) besteht. Die den Spalt 8 bildenden Kantenbereiche der Bleche 7, 7' sind etwas nach unten abgewinkelt. An dem von dem Messerwellenpaar 3 abgewandten Blech 7 ist die Anschlagleiste 6 zum Verstellen lösbar befestigt.

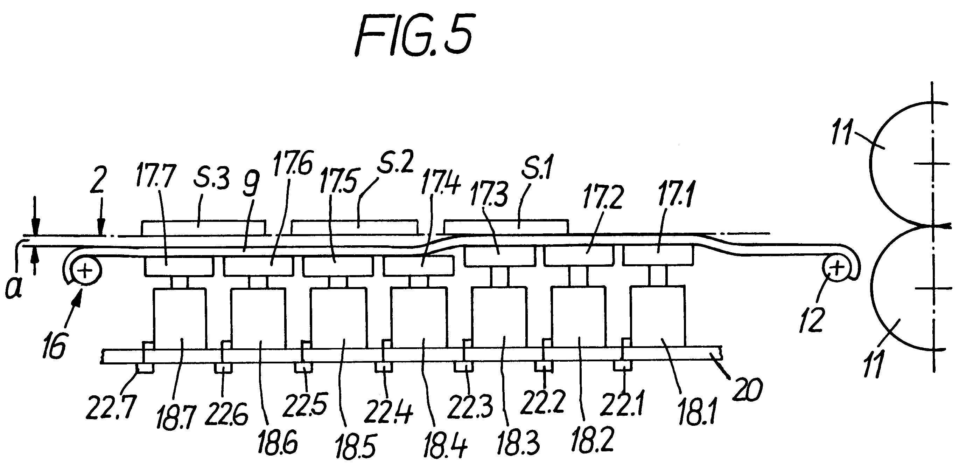

Zwischen den beiden Blechen 7, 7' verläuft innerhalb des Spaltes 8 das Obertrum 9 eines aus einem Flachriemen gebildeten Endlosbandes 10. Das Obertrum 9 liegt mit seinen seitlichen Kanten auf den abgewinkelten Kantenbereichen der Bleche 7, 7' auf, und seine Oberfläche liegt dabei wenige Zehntelmillimeter (vgl. Maß a in Fig. 5) unter der Transportebene 2.

Das Endlosband 10 wird unmittelbar vor einem zweiten Messerwellenpaar 11 um eine erste Umlenkrolle 12 umgelenkt. Unterhalb der Umlenkrolle 12 befindet sich - mittig - eine weitere Umlenkrolle 13 und - unten - eine Antriebsrolle 14, die das Untertrum 15 des Endlosbandes 10 hält. Die Achsen der Rollen 12 bis 14 stehen im wesentlichen senkrecht untereinander, so daß sich für das Endlosband 10 ein bemerkenswerter Umschlingungswinkel um die Antriebsrolle 14 von fast 180° ergibt.

Das Endlosband 10 wird an dem von dem Messerwellenpaar 11 abgewandten Ende des Vorschubtisches 1 von einer den Rollen 12 bis 14 entsprechenden Rollenanordnung 16 vom Untertrum 15 in das Obertrum 9 erneut umgelenkt. Die Rollenanordnung 16 kann als Ganzes zum Spannen des Endlosbandes 10 dienen, es kann aber auch nur eine, z.B. die mittlere Rolle der Rollenanordnung 16 oder eine weitere (nicht dargestellte) Rolle zum Spannen des Endlosbandes herangezogen werden.

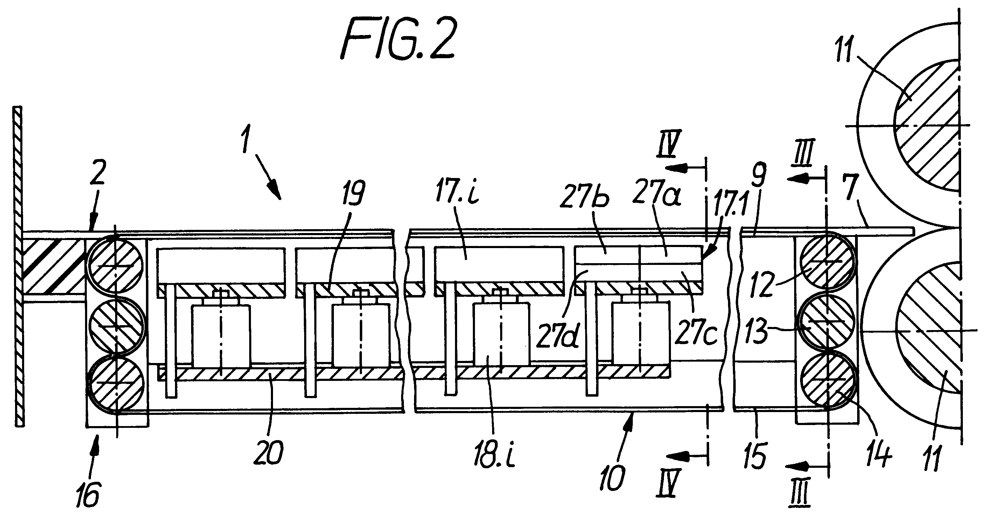

Unter dem Obertrum 9 befindet sich eine Vielzahl von Magnetanordnungen 17.i (i = 1...7, allgemein: i = 1...n), die jeweils auf einem Verstellorgan 18.i (i = 1...7, allgemein: i = 1...n) angeordnet sind. Die Magnetanordnungen 17.i können einstückig ausgebildet sein (wie in Fig. 1 und 2 für 17.i dargestellt) oder aus mehreren, gleichpolig ausgerichteten Magnetelementen zusammengesetzt sein. In Fig. 2 und 4 ist die Magnetanordnung 17.1 als aus acht Einzelmagneten 27a bis 27h bestehend dargestellt. Die Einzelmagnete 27a bis 27d liegen - in Blickrichtung des Schnittes IV-IV gesehen - in einer linken, die Einzelmagnete 27e bis 27h in einer rechten Reihe auf einem mit dem Verstellorgan 18.1 (allgemein: 18.i) verbundenen Magnethalter 19 (die Einzelmagnete 27f und 27h sind in Fig. 2 durch die Einzelmagnete 27b und 27d und in Fig. 4 durch die Einzelmagnete 27e bzw. 27g verdeckt) und sind durch einen Spalt 23 getrennt.

Die Verstellorgane 18.i sind im vorliegenden Ausführungsbeispiel als einzeln ansteuerbare pneumatische Hubzylinder ausgebildet und auf einem gemeinsamen Träger oder Halter 20 befestigt. Die Hubzylinder 18.i sind jeweils durch ein eigenes Ventil 22.i (i = 1...7, allgemein: i = 1...n) ansteuerbar.

Damit die aus dem ersten Messerwellenpaar 3 kommenden Streifen immer mittig über dem Endlosband 10 auf der Transportebene 2 zur Auflage kommen, ist der gesamte Vorschubtisch 1 senkrecht zu den Achsen des ersten Messerwellenpaares 3 in waagerechter Richtung verstellbar.

In Abwandlung des beschriebenen Ausführungsbeispieles können die Verstellorgane 18.i auch als hydraulische Zylinder oder elektrische Hubmagnete ausgebildet sein.

Der Separiervorgang der Streifen S.1 bis S.3 wird anhand der Fig. 5 näher erläutert. In dieser Fig. sind die Abmessungen der Deutlichkeit halber stark verzerrt dargestellt. Insbesondere der praktisch nicht vorhandene Abstand zwischen den einzelnen Blechstreifen erscheint in dieser Fig. extrem groß. Die Streifen S.1 bis S.3 sind durch die Rundmesser 4 des Messerwellenpaares 3 auf einer Blechtafel aus Weißblech geschnitten und liegen nebeneinander auf der Ablage- bzw. Transportebene 2. Zunächst werden die Ventile 22.1 bis 22.3 geschaltet, so daß die Magnetanordnungen 17.1 bis 17.3 angehoben werden. Das Obertrum 9 des Endlosbandes 10, das vor dem Aktivieren der Ventile 22.1 bis 22.3 um ein Maß a von einigen Zehntelmillimetern unterhalb der Transportebene 2 liegt, wird durch die Magnete 17.1 bis 17.3 in deren Bereich so weit nach oben gedrückt, daß die Oberfläche des Obertrum 9 in Höhe der Transportebene 2 liegt. Durch den Druck der Pneumatikzylinder 18.1 bis 18.3 wird das Obertrum 9 in der angehobenen Position in engen Kontakt mit den Blechstreifen S.1 gebracht. Durch die Magnete 17.1 bis 17.3 wird zudem eine Anziehungskraft auf den Blechstreifen S.1 ausgeübt, so daß zwischen dem Obertrum 9 und dem Blechstreifen S.1 ein Reibschluß entsteht und der Blechstreifen von dem Endlosband 10 in Richtung auf das Messerwellenpaar 11 mitgenommen wird. Durch die Rollenmesser des Messerwellenpaares 11 wird der Blechstreifen S.1 in Zuschnitte geschnitten.

Wenn der Blechstreifen S.1 einen betrieblich vorgebbaren Abstand zum Blechstreifen S.2 hat oder von den Rollenmessern des Messerwellenpaares 11 erfaßt wird, werden zusätzlich die Ventile 22.4 und 22.5 aktiviert und die Magnetanordnungen 17.4, 17.5 angehoben, so daß nunmehr der Blechstreifen S.2 von dem Endlosband 10 mitgenommen wird. Hat der Blechstreifen S.2 einen betrieblich vorgebbaren Mindestabstand zum Blechstreifen S.3 oder wird der Blechstreifen S.2 von dem Messerwellenpaar 11 erfaßt, so werden auch die Ventile 22.6 und 22.7 aktiviert und der Blechstreifen S.3 durch Anheben der Magnetanordnungen 17.6 und 17.7 in Richtung des Messerwellenpaares 11 mitgenommen. Nach dem Durchgang des letzten Blechstreifens S.3 werden alle Ventile 22.i zurückgeschaltet. Alle Magnetanordnungen 17.i werden abgesenkt, und das Obertrum 9 des Endlosbandes 10 liegt nunmehr wieder unterhalb der Transportebene 2, und der Transporttisch 1 ist zum Ablegen eines weiteren Satzes von Blechstreifen vorbereitet.

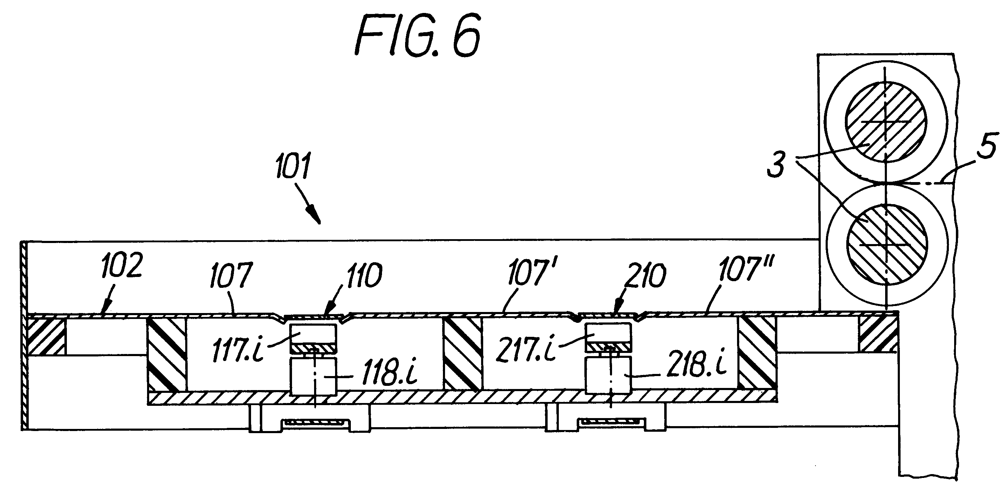

Bei einem weiteren Ausführungsbeispiel gemäß Fig. 6, die einem Querschnitt gemäß Fig. 1 vergleichbar ist, ist der Vorschubtisch 101 mit zwei Endlosbändern 110 und 210, die jeweils zwischen den die Ablage- und Transportebene 102 bildenden Blechen 107, 107' und 107'' angeordnet sind, ausgerüstet. Der Aufbau der Endlosbänder 110, 210 mit den zugehörigen Magnetanordnungen 117.i bzw. 217.i und den zugehörigen Verstellorganen 118.i und 218.i entspricht dem Aufbau des Endlosbandes 10. Ein Längsschnitt durch jedes der Endlosbänder 110 bzw. 210 entspricht dem Längsschnitt durch das Endlosband 10 gemäß Fig. 2. Beim Betrieb dieser Ausführungsform werden die Magnetanordnungen 117.i und 217.i, die jeweils den gleichen Abstand von dem Messerwellenpaar 11 aufweisen, z.B. 117.1 und 217.1, gleichzeitig angehoben bzw. abgesenkt. Die Blechstreifen werden so immer gleichzeitig in zwei Punkten erfaßt und ohne Verkantungsgefahr sicher transportiert.

## Patentansprüche

1. Vorschubeinrichtung für Blechstreifen (S.1, S.2, S.3) aus ferromagnetischem Material zu dem zweiten Messerwellenpaar (11) einer Rollenmesserwinkelschere mit einer Ablage für die von dem ersten Messerwellenpaar (3) geschnittenen Streifen (S) und mindestens einem umlaufenden Mitnehmerorgan (10; 110, 210),
**dadurch gekennzeichnet**,
daß die Ablage für die Blechstreifen (S) aus ebenen Flächenelementen (7, 7'; 107, 107', 107'') mit glatter Oberfläche besteht, die bzw. die jeweils durch einen in Vorschubrichtung verlaufenden, parallelen Abstand (8) voneinander getrennt sind,
daß das umlaufende Mitnehmerorgan als Endlosband (10; 110, 210) ausgebildet ist, dessen Obertrum (9) zwischen den bzw. zwischen zwei Flächenelementen (7, ...; 107, ...) um einen Abstand (a) von 0,1 bis 0,9 mm, vorzugsweise 0,2 bis 0,5 mm, unterhalb der durch die Flächenelemente (7, ...; 107, ...) gebildeten Ablage- und Transportebene (2; 102) angeordnet ist
und daß unterhalb des Obertrum (9) des Endlosbandes (10; 110, 210) eine Vielzahl von hintereinander angeordneten, in der Höhe einzeln steuerbaren Magnetanordnungen (17.i; 117.i, 217.i) vorhanden sind.

2. Vorschubeinrichtung nach Anspruch 1, dadurch gekennzeichnet, daß die Magnetanordnungen (17.i) aus mehreren Einzelmagneten (27a...27h) zusammengesetzt sind.

3. Vorschubeinrichtung nach Anspruch 2, dadurch gekennzeichnet, daß die Einzelmagnete (27a...27h) in zwei Reihen angeordnet sind, die durch einen in Richtung des Endlosbandes (10) verlaufenden Abstand (23) getrennt sind.

4. Vorschubeinrichtung nach Anspruch 2 oder 3, dadurch gekennzeichnet, daß die Einzelmagnete (27a...27h) übereinander angeordnet sind.

5. Vorschubeinrichtung nach einem der Ansprüche 1 bis 4, dadurch gekennzeichnet, daß die einander zugewandten Kantenbereiche der Flächenelemente (7, 7'; 107, 107', 107'') nach unten abgewinkelt sind und die Kanten des Obertrum (9) des Endlosbandes (10) in Ruhestellung auf den abgewinkelten Kantenbereichen der Flächenelemente (7, ...; 107 ...) aufliegen.

6. Vorschubeinrichtung nach einem der Ansprüche 1 bis 5, dadurch gekennzeichnet, daß die Magnetanordnungen (17.i; 117.i, 217.i) durch pneumatische Hubzylinder (18.i; 118.i, 218.i) in der Höhe verstellbar sind.

## Claims

1. Feed unit for sheet metal strips (S.1, S.2, S.3) of ferromagnetic material to the second pair of cutter driving shafts (11) of rotary-cutter angle shears with a deposit arrangement for the sheet metal strips (S) cut by the first pair of cutter driving shafts (3) and at least one circulating driver element (10; 110, 210), characterised in that the deposit arrangement for the sheet metal strips (S) comprises plane surface elements (7, 7'; 107, 107', 107'') with a smooth surface which are respectively separated from one another by a parallel space (8) running in the direction of feed;
that the circulating driver element is constructed as a continuous belt (10; 110, 210), the top run (9) of which is arranged between the, or two, surface elements (7,...; 107,...) at a distance (a) of 0.1 to 0.9 mm, preferably 0.2 to 0.5 mm, below the depositing and transporting plane (2; 102) formed by the surface elements (7,...; 107,...);
and that below the upper run (9) of the continuous belt (10; 110, 210), a plurality of magnet arrangements (17.i; 117.i; 217.i) are provided which are arranged one behind the other and may be individually controlled vertically.

2. Feed unit according to Claim 1, characterised in that the magnet arrangements (17.i) are composed of several individual magnets (27a...27h).

3. Feed unit according to Claim 2, characterised in that the individual magnets (27a...27h) are arranged in two rows, which are separated by a space (23) running in the direction of the continuous belt (10).

4. Feed unit according to Claim 2 or 3, characterised in that the individual magnets (27a...27h) are arranged one above the other.

5. Feed unit according to one of Claims 1 to 4, characterised in that the facing edge regions of the surface elements (7, 7'; 107, 107', 107'') are angled downwards and the edges of the top run (9) of the continuous belt (10) lie on the angled edge regions of the surface elements (7,...; 107 ...) when in resting position.

6. Feed unit according to one of Claims 1 to 5, characterised in that the magnet arrangements (17.i; 117.i; 217.i) may be adjusted vertically by pneumatic hoisting cylinders (18.i; 118.i; 218.i).

## Revendications

1. Dispositif d'avancement pour des bandes de tôles (S.1, S.2, S.3) en matériau ferromagnétique, destiné à la deuxième paire d'arbres de couteaux (11) d'une cisaille à couteaux rotatifs circulaires à coupe angulaire, comportant une table de dépôt pour les bandes (S) coupées par la première paire d'arbres de couteaux (3) et au moins un organe d'entraînement tournant (10; 110, 210),
caractérisé
- en ce que la table de dépôt pour les bandes de tôle (S) est constituée d'éléments de surface plans (7, 7'; 107, 107' ,107'') comportant une surface supérieure lisse et qui sont chacun séparés les uns des autres par une distance (8) parallèle, dirigée dans le sens d'avancement,
- en ce que l'organe d'entraînement tournant est réalisé sous la forme d'une bande sans fin (10; 110, 210), dont le brin supérieur (9) est disposé entre les, ou entre les deux, éléments de surface (7, ...; 107, ...), à une distance (a) de 0,1 à 0,9 mm, de préférence de 0,2 à 0,5 mm, en-dessous du plan de dépôt et de transport (2; 102) formé par les éléments de surface (7, ...; 107, ...),
- et en ce qu'en dessous du brin supérieur (9) de la bande sans fin (10; 110, 210), sont disposés une multiplicité de dispositifs aimantés (17.i; 117.i, 217.i) placés les uns derrière les autres et pouvant être individuellement commandés en hauteur.

2. Dispositif d'avancement suivant la revendication 1, caractérisé en ce que les dispositifs aimantés (17.i) sont formés par l'assemblage de plusieurs aimants individuels (27a...27h).

3. Dispositif d'avancement suivant la revendication 2, caractérisé en ce que les aimants individuels (27a...27h) sont disposés suivant deux rangées, qui sont séparées par une distance (23), mesurée suivant la direction de la bande sans fin (10).

4. Dispositif d'avancement suivant la revendication 2 ou la revendication 3, caractérisé en ce que les aimants individuels (27a...27h) sont disposés les uns au-dessus des autres.

5. Dispositif d'avancement suivant l'une des revendications 1 à 4, caractérisé en ce que les zones d'arêtes des éléments de surface (7, 7'; 107, 107', 107'') se faisant face sont rabattues vers le bas et les arêtes du brin supérieur (9) de la bande sans fin (10) reposent, en position de repos, sur les zones d'arêtes rabattues des éléments de surface (7, ...; 107, ...).

6. Dispositif d'avancement suivant l'une des revendications 1 à 5, caractérisé en ce que les dispositifs aimantés (17.i; 117.i, 217.i) sont réglables en hauteur au moyen de vérins pneumatiques (18.i; 118.i, 218.i).
